# EUROPEAN PATENT APPLICATION

(11) **EP 4 485 721 A1**
(43) Date of publication of application: **01.01.2025**
(21) Application number: 23182661.1
(22) Date of filing: 30.06.2023
(51) Int. Cl.: H02B 13/045

(54) **A METAL ENCLOSURE FOR ELECTRICAL SWITCHGEAR**

(71) Applicant: ABB SCHWEIZ AG, 5400 Baden (CH)
(72) Inventor: SKAGMO, Dag Erik, 3275 Svarstad (NO); THINGSTAD PETTERSEN, Terje, 3734 Skien (NO); BJERKELY, Magnus, 3937 Porsgrunn (NO)
(74) Representative: Kransell & Wennborg KB

(57) **Abstract**

The present invention relates to a metal enclosure (100, 200) for electrical switchgear, the metal enclosure is configured to be pressurized above atmospheric pressure, the metal enclosure comprising: metal walls (102, 104, 106, 108, 110, 111) sealing outer perimeters of at least two volumes (118, 119) for accommodating different sets of electrical switchgear, at least one partition wall (116, 216) that separates the volumes for the different sets of electrical switchgear, the at least one partition wall is attached to the outer perimeter metal walls of the respective volumes that the respective at least one partition wall define, wherein the at least one partition wall protrudes outside the metal walls outer perimeters.

## Description

### Field of the Invention

The present invention relates to a metal enclosure for electrical switchgear.

### Background

Metal enclosures for gas-insulated switchgear encapsulated the switchgear in a pressurized environment. The gas is selected to provide electrical insulation inside the metal enclosure and typical gas is SF6 although other gases are also applicable such as dry air, N2, CO2 or mixture of two or three of N2, O2, CO2.

The dielectric withstand of the gas is proportional to the pressure inside the metal enclosure. Thus, it is advantageous to increase the pressure of the gas inside the metal enclosure. However, this means that the metal enclosure walls must be able to withstand the forces from the increased pressure.

Therefore, it is desirable to improve the ability for metal enclosures for gas-insulated switchgear to withstand higher pressures as is set out in more detail below.

### Summary

In view of the above-mentioned and other drawbacks of the prior art, it is an object of the present invention to provide a metal enclosure that at least partly alleviates the deficiencies with prior art.

According to a first aspect of the invention, there is provided a metal enclosure for electrical switchgear, the metal enclosure is configured to be pressurized above atmospheric pressure, the metal enclosure comprising: metal walls sealing outer perimeters of at least two volumes for accommodating different sets of electrical switchgear, at least one partition wall that separates the volumes for the different sets of electrical switchgear, the at least one partition wall is attached to the outer perimeter metal walls of the respective volumes that the respective at least one partition wall define, wherein the at least one partition wall protrudes outside the metal walls outer perimeters.

The present invention is at least partly based on the realization providing partition walls that act as bulkheads inside the metal enclosure. The partition walls greatly increase the pressure withstand of the complete metal enclosure. With the partition walls attached to the metal walls, forces that try to push one wall out to hold the opposite wall in place. To further improve this effect the partition wall completely cuts through the metal walls.

To withstand higher pressures is particularly important when moving to using dry air, N2, CO2 or a mixture of any two or three of N2, O2, CO2 as the dielectric gas. These gases require higher pressures to provide adequate insulation without increasing the distance between switchgear phases and components compared to more environmental unfriendly alternatives such as SF6. It is desirable to maintain a size, or at least not increase the size of the metal enclosures despite moving to different gases.

Generally, in electrification and gas insulated switchgear (GIS), if the pressure of gas in the metal enclosure exceeds 1.5 bar abs, then the enclosure may be known as a high-pressure enclosure based on known standards. If so, then it has to pass a related pressure routine test and it has made the traditional enclosures heavy and quite expensive. Therefore, the filling pressure of medium voltage (MV)-GIS as is herein discussed is traditionally < 1.5 bar abs, e.g., in range 1.0 - 1.5 bar abs. Advantageously, the herein disclosed metal enclosure is suitable for filling pressure of 1.0 - 4.0 bar abs, preferably for 1.5-3.0 bar abs. In other words, an increased pressure compared to the traditional range of 1.0 - 1.5 bar abs without the need for heavy and excessively large enclosure walls.

According to an embodiment, at least one of the metal walls may be corrugated. Corrugated metal walls increase the strength of the metal walls and thus increase the pressure withstand of the metal enclosure.

According to an embodiment, the partition walls may comprise protrusions along the perimeter of the partition walls, wherein the protrusions cut through the metal walls to extend outside the metal enclosure. The protrusions may be tabs that reach through the walls for enabling a strong connection, for example by welding to the metal wall.

According to an embodiment, the partition walls may extend outside the metal enclosure on four sides of the metal enclosure. That is, a strong anchoring is possible to four walls, whereby forces for each pair of walls act to hold the opposite wall in place. Overall, the pressure withstand is increased.

According to an embodiment, the entire outer perimeter of the partition walls extends outside the metal enclosure. Thus, the partition wall is larger than the outer circumference of the outer metal walls so that the entire outer perimeter is visible from the outside of the metal enclosure. In this way, an even strong anchoring is possible and also an increased pressure withstand.

According to an embodiment, the metal enclosure may comprise at least two metal enclosure modules each comprising metal walls sealing outer perimeters of one volume, and one partition wall between neighboring metal enclosure modules. In other words, a modular metal enclosure is provided. Further, each partition wall may have a metal enclosure module welded to one side of the partition wall and another metal enclosure module welded to the opposite side, wherein the partition walls extend with its entire outer perimeter outside the metal enclosure modules. That is two modules are welded to opposite sides of a single partition wall.

According to an embodiment, the partition walls may be welded to the outer perimeter metal walls. That is, the metal walls may define the outermost perimeter. Preferably, the welds are on the outside of the metal walls.

According to an embodiment, at least one of the outer perimeter metal walls is a corrugated plate. Corrugating plates improve the strength of the plate and thereby also the pressure withstand.

According to an embodiment, a longitudinal axis of the corrugations may be orthogonal to the main plane of the partition walls.

According to an embodiment, the thickness of the partition walls may be in the range of 1 mm to 5 mm, preferably 1 mm to 3 mm.

According to an embodiment, the at least one partition wall may comprise openings that connect neighboring volumes. This provides for e.g., gas circulation between volumes for cooling.

According to an embodiment, the outer walls and the partition walls of the metal enclosure may be made from steel. Steel is a strong material that can increase the ability for the metal enclosure to withstand the internal pressure.

According to a second aspect of the present invention, there is provided a gas insulated switchgear comprising: a set of electrical switches; and a metal enclosure according to any one of the preceding claims pressurized by a gas.

Further effects and features of the second aspect of the invention are largely analogous to those described above in connection with the first aspect of the invention.

Further features of, and advantages with, the present invention will become apparent when studying the appended claims and the following description. The skilled person realizes that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 is a perspective view of a front side of a metal enclosure according to embodiments of the invention;
Fig. 2 is a perspective view of a rear side of the metal enclosure in fig. 1;
Fig. 3 is an exploded view of the metal enclosure in figs. 1 and 2;
Fig. 4 is a perspective view of a front side of a metal enclosure according to embodiments of the invention;
Fig. 5 is a perspective view of a rear side of the metal enclosure in fig. 4; and
Fig. 6 is an exploded view of the metal enclosure in figs. 4 and 5.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

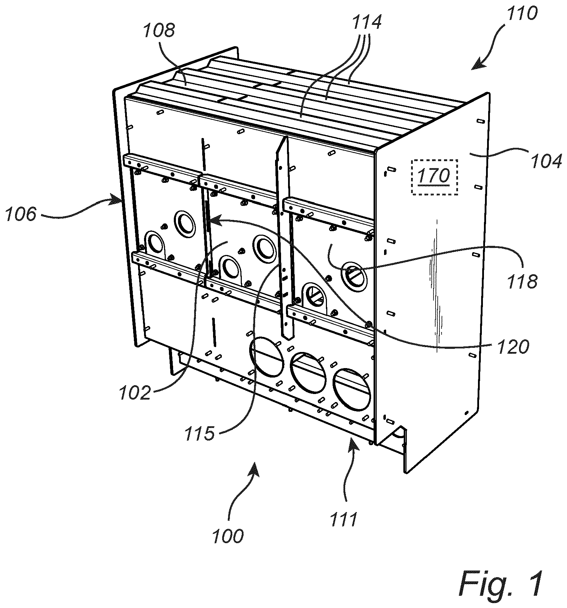

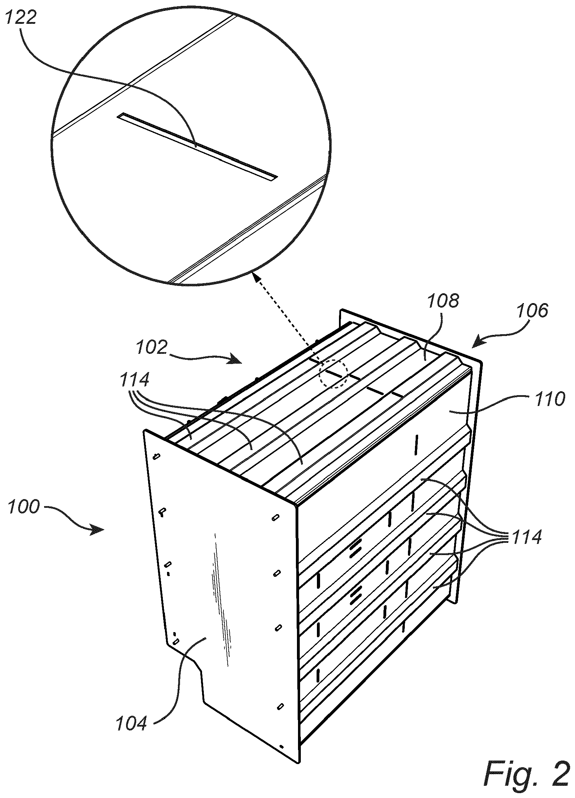

Fig. 1 illustrates a front view and fig. 2 illustrates a rear view of a metal enclosure 100 for electrical switchgear according to an embodiment. The metal enclosure 100 is configured to be pressurized above atmospheric pressure.

The metal enclosure 100 comprises metal walls 102, 104, 106, 108, 110, 111 sealing outer perimeters of at least two volumes for accommodating different sets of electrical switchgear.

The metal walls including a first metal wall 102 arranged opposite a second metal wall 110. Preferably, the walls 102, 104, 106, 108, 110, 111 of the metal enclosure are made from steel.

Furthermore, a third wall 108 provided as a metal plate at the top side of the metal enclosure 100 is connected with both the first metal wall 102 and the second metal wall 110 for example by welding. The third metal wall 108 comprises corrugations 114 and is in this embodiment also connected to the side walls 104 and 106, preferably by welding.

An elongated metal stiffener 115 is attached to the outer side 118 of the first metal wall 102. It is possible that a set of elongated stiffeners are attached to the outer side 118 of the first metal wall 102, in such case, the elongated metal stiffeners are substantially parallel with each other.

Furthermore, the second metal 110 wall is also corrugated. A corrugated wall or plate includes corrugations defining valleys and ridges in the plate.

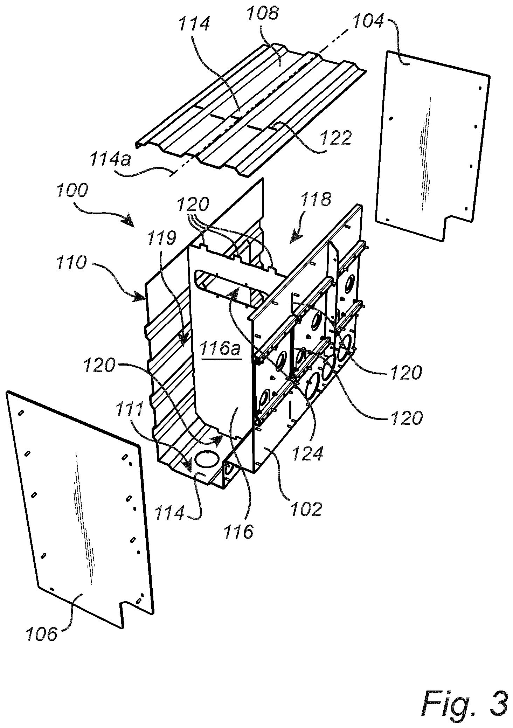

Fig. 3 is an exploded view of the metal enclosure 100 in figs. 1 and 2. The metal enclosure comprises at least one partition wall 116 that separates the two volumes 118 and 119 for the different sets of electrical switchgear.

The at least one partition wall 116 is attached to the outer perimeter metal walls 102, 108, 110, 111, of the respective volumes 118, 119 that the respective at least one partition wall 116 define. The at least one partition wall 116 protrudes outside the outer perimeters of the metal walls 102, 108, 110, 111. The partition wall 116 preferably protrudes through the thickness of the metal walls 102, 108, 110, 111.

In this embodiment, the partition wall 116 comprise protrusions 120 or tabs along the perimeter of the partition walls. The protrusions 120 cut through the metal walls 102, 108, 110, 111, to extend outside the metal enclosure 100.

In other words, the metal walls 102, 108, 110, 111, has suitable through-holes 122 through which the protrusions 120 can be inserted and welded to the outer surface of each of the metal walls 102, 108, 110, 111. Welding can be spot welding in the through-holes 122 with the protrusions 120 in the through-holes 122.

Preferably, the partition wall 116 extend outside the metal enclosure 100 on four sides of the metal enclosure 100.The four sides is here the first metal wall 102, the second metal wall 110 opposite the first metal wall 102, the top plate 108 and the opposite bottom plate 111. The protrusions 120 may thus be visible from outside the enclosure 100.

The bottom plate 111 preferably comprises at least one corrugation 114. A longitudinal axis 114a of the corrugations 114 for any one or all of the metal walls is orthogonal to the main plane 116a of the partition walls 116.

The at least one partition wall 116 comprises an opening 124 that connect neighboring volumes.

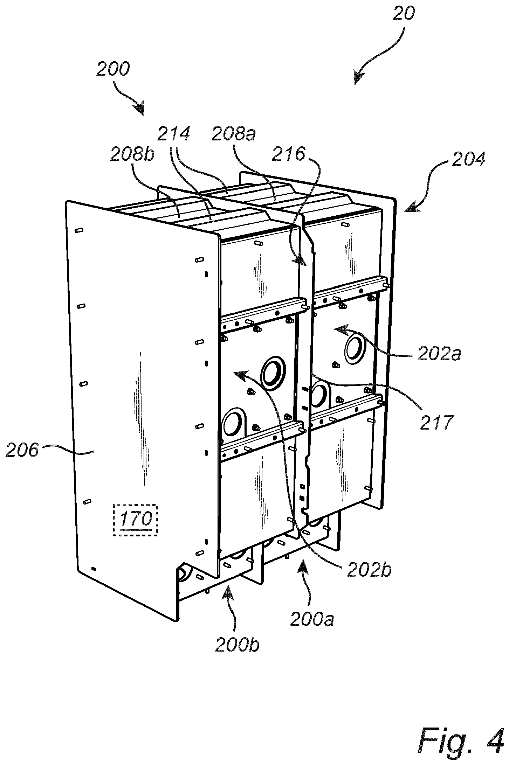

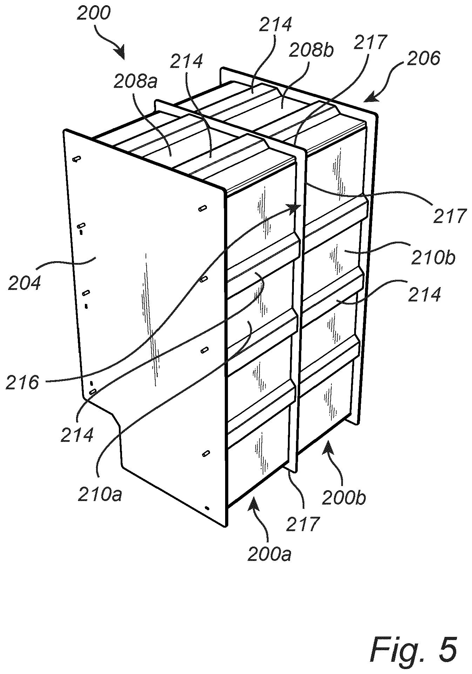

Fig. 4 illustrates a front view and fig. 5 illustrates a rear view of a metal enclosure 200 for electrical switchgear according to an embodiment. The metal enclosure 200 is configured to be pressurized above atmospheric pressure.

The metal enclosure 200 comprises metal walls 202a-b, 204, 206, 208a-b, 210a-b, 211a-b sealing outer perimeters of at least two volumes 218 and 218 for accommodating sets of electrical switchgear 170.

The metal enclosure 200 comprises at least one partition wall 216 that separates the two volumes 218 and 220 for the different sets of electrical switchgear. The entire outer perimeter 217 of the partition wall 216 extends outside the metal enclosure 200.

The metal enclosure 200 is modular and comprises a first metal enclosure module 200a and a second metal enclosure module 200b. Each of the metal enclosure modules comprises metal walls sealing outer perimeters of one volume, and one partition wall 216 between neighboring metal enclosure modules.

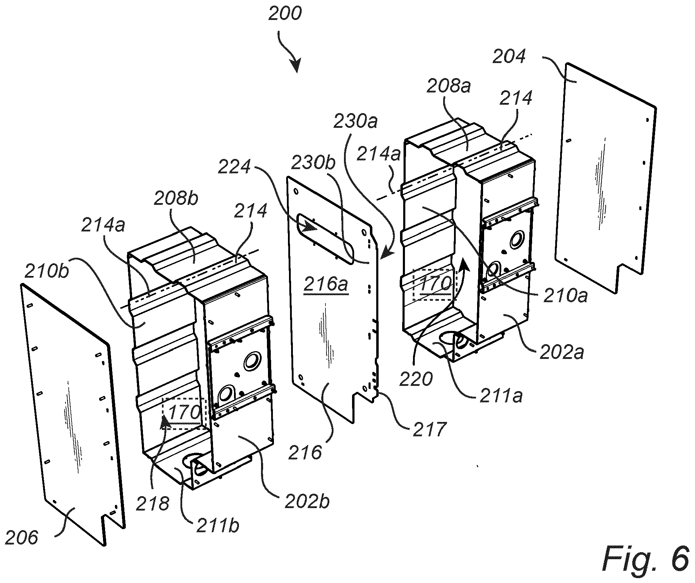

Fig. 6 is an exploded view of the metal enclosure 200 in figs. 4 and 5. The metal enclosure comprises at least one partition wall 216 that separates the two volumes 218 and 220 for the different sets of electrical switchgear.

More specifically, the first metal enclosure module 200a comprises metal walls 202a, 208a, 210a, and 211a. The second metal enclosure module 200b comprises metal walls 202b, 208b, 210b, and 211b.

The metal walls 202a-b, 208a-b, 210a-b, and 211a-b of the respective metal enclosure module 200a-b includes a first metal wall 202a,b arranged opposite a second metal wall 210a,b, and a third metal wall 208a,b arranged opposite a fourth metal wall 21 1a,b. Preferably, the walls 202a-b, 208a-b, 210a-b, and 211a-b of the metal enclosure modules and the side walls 204 and 206 are made from steel and may be provided as metal plates. Furthermore, here, the walls 210a,b, 211a,b, and 208a,b are corrugated plates.

The third walls 208a,b are provided as a metal plate at the top side of the metal enclosure 200.

The at least one partition wall 216 comprises an opening 224 that connect neighboring volumes 218 and 220.

The partition wall 216 has a metal enclosure module 200a welded to one side 230a of the partition wall 216 and another metal enclosure module 200b welded to the opposite side 230b of the partition wall 216. For example, the metal walls 202a, 208a, 210a, and 211a are welded to the first planar side surface 230a of the partition wall 216 and the metal walls 202b, 208b, 210b, and 211b are welded to the second planar side surface 230b of the partition wall 216. The first side 230a is opposite to the second side 230b with respect to the main plane of the planar partition wall 216 provided as a plate.

Preferably, the welds are on the outside perimeter 240 of the metal walls 202a-b, 208a-b, 210a-b, and 211a-b.

In the embodiments, the corrugations 214 extend along a longitudinal axis 214a. which may be orthogonal to the main plane 216a of the partition wall 216.

The outer walls and the partition walls of the metal enclosures described herein may be made from steel and may be provided as plates with or without corrugations.

The partition walls described herein may have a thickness in the range of 1 mm to 5 mm, preferably 1 mm to 3 mm.

There is further provided, see figs. 1 and 4, a gas insulated switchgear 10, 20 comprising a set of electrical switches 170, and a metal enclosure 100, 200 pressurized by a gas. The switches may be 10-52 kV switches, preferably 12/24/36, 40.5 kV switches. The switches may for example be e.g. CC, CCV, CCF, CCCC etc., where C: Cable switch module, De: Direct cable connection with earthing module, D: Direct cable connection module, F: Switch-fuse disconnector module, V: Vacuum circuit-breaker module. Preferably, the gas inside the metal enclosure is dry air, N2, CO2 or a mixture of any two or three of N2, O2, CO2.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A metal enclosure (100, 200) for electrical switchgear, the metal enclosure is configured to be pressurized above atmospheric pressure, the metal enclosure comprising:
metal walls (102, 104, 106, 108, 110, 111) sealing outer perimeters of at least two volumes (118, 119) for accommodating sets of electrical switchgear,
at least one partition wall (116, 216) that separates the volumes for the different sets of electrical switchgear, the at least one partition wall is attached to the outer perimeter metal walls of the respective volumes that the respective at least one partition wall define, wherein the at least one partition wall protrudes outside the metal walls outer perimeters.

2. The metal enclosure according to claim 1, wherein at least one of the metal walls is corrugated.

3. The metal enclosure according to any one of claims 1 and 2, wherein the partition walls comprise protrusions (120) along the perimeter of the partition walls, wherein the protrusions cut through the metal walls to extend outside the metal enclosure.

4. The metal enclosure according to any one of the preceding claims wherein the partition walls extend outside the metal enclosure on four sides of the metal enclosure.

5. The metal enclosure according to any one of the preceding claims, wherein the entire outer perimeter (217) of the partition walls extends outside the metal enclosure.

6. The metal enclosure (200) according to any one of the preceding claims, comprising at least two metal enclosure modules (200a, 200b) each comprising metal walls (202a-b, 208a-b, 210a-b, 211a-b) sealing outer perimeters of one volume, and one partition wall between neighboring metal enclosure modules.

7. The metal enclosure according to claim 6, wherein each partition wall has a metal enclosure module welded to one side (230a) of the partition wall and another metal enclosure module welded to the opposite side (230b), wherein the partition walls extend with its entire outer perimeter outside the metal enclosure modules.

8. The metal enclosure according to any one of the preceding claims, wherein the partition walls are welded to the metal walls.

9. The metal enclosure according to claim 8, wherein the welds are on the outside perimeter of the metal walls.

10. The metal enclosure according to any one of the preceding claims, wherein at least one of the outer perimeter metal walls is a corrugated plate.

11. The metal enclosure according to claim 10, wherein a longitudinal axis of the corrugations is orthogonal to the main plane of the partition walls.

12. The metal enclosure according to any one of the preceding claims, wherein the partition walls have a thickness in the range of 1 mm to 5 mm, preferably 1 mm to 3 mm.

13. The metal enclosure according to any one of the preceding claims, wherein the at least one partition wall comprises openings (124, 224) that connect neighboring volumes.

14. The metal enclosure according to any one of the preceding claims, wherein the outer walls and the partition walls of the metal enclosure are made from steel.

15. A gas insulated switchgear (10, 20) comprising:
a set of electrical switches (170); and
a metal enclosure (100, 200) according to any one of the preceding claims pressurized by a gas.
